# EUROPÄISCHE PATENTSCHRIFT

(11) **EP 0 737 037 B1**
(45) Veröffentlichungstag und Bekanntmachung des Hinweises auf die Patenterteilung: **18.08.1999**
(21) Anmeldenummer: 95936458.9
(22) Anmeldetag: 09.10.1995
(51) Int. Cl.: A23L 1/01

(54) **VERFAHREN FÜR DIE ZUBEREITUNG VON LEBENSMITTELN IN EINEM HEISSLUFTOFEN**
PROCESS FOR PREPARING FOODSTUFFS IN A HOT AIR OVEN
PROCEDE DE PREPARATION D'ALIMENTS DANS UN FOUR A AIR CHAUD

(30) Priorität: 10.10.1994 DE 4436035
(43) Veröffentlichungstag der Anmeldung: 16.10.1996
(73) Patentinhaber: UBERT GASTROTECHNIK GMBH, 46348 Raesfeld (DE)
(72) Erfinder: UBERT, Harald, D-46348 Raesfeld (DE); BARTHEL, Joachim, D-48734 Reken (DE)
(74) Vertreter: Lenzing, Andreas, Dr.
(86) Internationale Anmeldenummer: EP9503970
(87) Internationale Veröffentlichungsnummer: WO9610926

(56) Entgegenhaltungen:
- WO-A-93/18349
- WO-A-95/27399
- US-A- 4 737 373
- FLEISCH, 1994, ANON 'Cooking with hot air and steam.'

## Beschreibung

Die vorliegende Erfindung betrifft ein Verfahren für die Zubereitung von Lebensmitteln, wie z. B. Pommes Frites in einem Heißluftofen mit den Merkmalen des Oberbegriffs des Anspruchs 1.

Ein derartiges Verfahren ist beispielsweise aus der Patentanmeldung PCT/SE 93/00204 bekannt.

Bei den bekannten Verfahren wird der Innenraum eines Heißluftofens auf eine Solltemperatur aufgeheizt. In einen in den Innenraum einschiebbaren Drahtkorb wird sodann das zuzubereitende Lebensmittel gegeben, beispielsweise tiefgekühlte Pommes Frites, und in den Innenraum verbracht.

Der Innenraum kühlt sich sodann aufgrund der niedrigen Temperatur und der hohen Wärmekapazität des tiefgekühlten Lebensmittels ab. Deshalb wird die Ofenheizung eingeschaltet und mit einem Heißluftgebläse ein Luftstrom innerhalb des Ofens erzeugt. Der in Rotation versetzte Drahtkorb mit dem darin befindlichen Lebensmittel wird von dem Heißluftstrom durchsetzt, und das Lebensmittel wird so erwärmt. Mit dem Erreichen der eingestellten Solltemperatur, die bei Pommes Frites üblicherweise 230° Celsius beträgt, beginnt die Regelung der Ofenheizung, die Temperatur konstant zu halten. Außerdem beginnt bei dieser Temperatur die sogenannte Dampfphase, in der das Lebensmittel in der Ofenatmosphäre gegart wird. Die aus dem Lebensmittel entweichende Feuchtigkeit verbleibt im Innenraum des Ofens und erzeugt auf diese Weise eine feuchte, heiße Ofenatmosphäre. In dieser Dampfphase wird das eingeführte Lebensmittel lediglich gegart und nicht gebräunt, weil an der Oberfläche des Lebensmittels bei der hohen Feuchtigkeit kein Röstvorgang einsetzt.

Nach einer bestimmten Zeit in der Dampfphase, die abhängig von der Masse und der Temperatur des eingefüllten Lebensmittels ist und die beispielsweise aus dem Temperaturabfall beim Beginn des Prozesses berechnet werden kann, wird der Innenraum oder Garraum des Ofens über einen Zuluftkanal belüftet und über einen Abluftkanal entlüftet, so daß die feuchte Atmosphäre entweichen und eine trockene Atmosphäre sich einstellen kann. Bei weiterhin aufrechterhaltener Solltemperatur schließt sich an die vorangegangene Dampfphase eine Röstphase an, in der das zuzubereitende Lebensmittel durch den in trockener Atmosphäre ablaufenden Röstvorgang gebräunt und knusprig gemacht wird. Nach Abschluß der Röstphase ist das Lebensmittel fertig zubereitet, die Ofenheizung wird abgeschaltet und das Lebensmittel kann entnommen werden.

Im Bereich der Gastronomie ist es bei Anwendung des bekannten Verfahrens erwünscht, einen möglichst großen Durchsatz an Lebensmitteln pro eingesetztem Gerät zu erreichen. Zu diesem Zweck werden möglichst kurze Zubereitungszeiten angestrebt.

Es ist deshalb Aufgabe der vorliegenden Erfindung, das bekannte Verfahren dahingehend zu verbessern, daß eine kürzere Zubereitungszeit für die Lebensmittel erreicht wird.

Diese Aufgabe wird bei einem Verfahren mit den Merkmalen des Oberbegriffs des Anspruchs 1 durch die Merkmale des kennzeichnenden Teils des Anspruchs 1 gelöst.

Weil der Garraum während der Dampfphase auf eine höhere Temperatur als die Solltemperatur aufgeheizt wird, verläuft der Garvorgang in der Dampfphase schneller, ohne die Qualität des Lebensmittels zu beeinträchtigen. Es tritt nämlich trotz der hohen Temperatur im Garraum keine Rauchentwicklung auf.

Es ist außerdem vorteilhaft, wenn die Zuluft für den Austausch der Atmosphäre am Ende der Dampfphase auf die Solltemperatur aufgeheizt wird, weil dann ein Temperaturabfall beim Übergang von der Dampfphase in die Röstphase vermieden wird. Die zum Wiederaufheizen des Garraums auf die Solltemperatur für die Röstphase benötigte Zeit wird auf diese Weise eingespart.

Nachdem das Gargut in den Garraum eingefüllt wurde, ist es vorteilhaft, den Zeitraum, der zum Wiedererreichen der Solltemperatur erforderlich ist, zu erfassen. Dieser Zeitraum ist charakteristisch für die Masse und die Temperatur des eingeführten Lebensmittels, woraus die kürzestmögliche Zeitdauer für die Zubereitung berechnet werden kann.

Wenn die Länge der Dampfphase und/oder der Röstphase in Abhängigkeit von dem ermittelten Zeitraum vorgenommen wird, wird eine mengenunabhängige, gleichmäßige Qualität des Produkts erreicht.

Vorteilhaft ist auch die Ausgabe des zubereiteten Gargutes durch manuelles Herausziehen des Korbs und nachfolgende automatische Drehung des Korbs um 360°. Es ist insbesondere Vorteilhaft, wenn die Temperatur während der Dampfphase zwischen 200° und 270°, insbesondere zwischen 240° und 255° und vorzugsweise während des größten Teils der Dampfphase 250° beträgt.

In der Röstphase sollte die Temperatur zwischen 190° und 240°, insbesondere zwischen 220° und 235° Celsius, vorzugsweise während des größten Teils der Röstphase 230° Celsius betragen. Wenn nach dem Ende der Vorbereitungszeit das Gargut nicht unmittelbar dem Ofen entnommen wird, ist es vorteilhaft, wenn das Heizgebläse abgeschaltet ist und in regelmäßigen Abständen der Korb in Rotation versetzt wird. Schließlich kann eine Eingabevorrichtung wie z. B. eine Taste oder ein Regler abgefragt werden und bestimmte Prozeßparameter wie z. B. Zeit und/oder Temperatur in Abhängigkeit von dem Ergebnis der Abfrage verändert werden. So hat ein Benutzer die Möglichkeit, die Produktbeschaffenheit innerhalb gewisser Grenzen zu variieren.

Ein Ausführungsbeispiel des erfindungsgemäßen Verfahrens ist in der Zeichnung dargestellt.

Es zeigen:
Fig. 1: Die Programmschritte eines erfindungsgemäßen Verfahrens gemäß einem bevorzugten Ausführungsbeispiel bis zum Start des Garprogrammes;
Fig. 2: Die an die Verfahrensschritte gemäß Figur 1 anschließenden Schritte bis zum Ende der Dampfphase;
Fig. 3: Die nach dem Ende der Dampfphase folgenden Verfahrensschritte bis zum Entnehmen des zubereiteten Lebensmittels;
Fig. 4: Die abschließenden Verfahrensschritte zum Entleeren des Korbes bis zum Programmende; sowie
Fig. 5: den Temperaturverlauf während eines Zubereitungsvorganges.

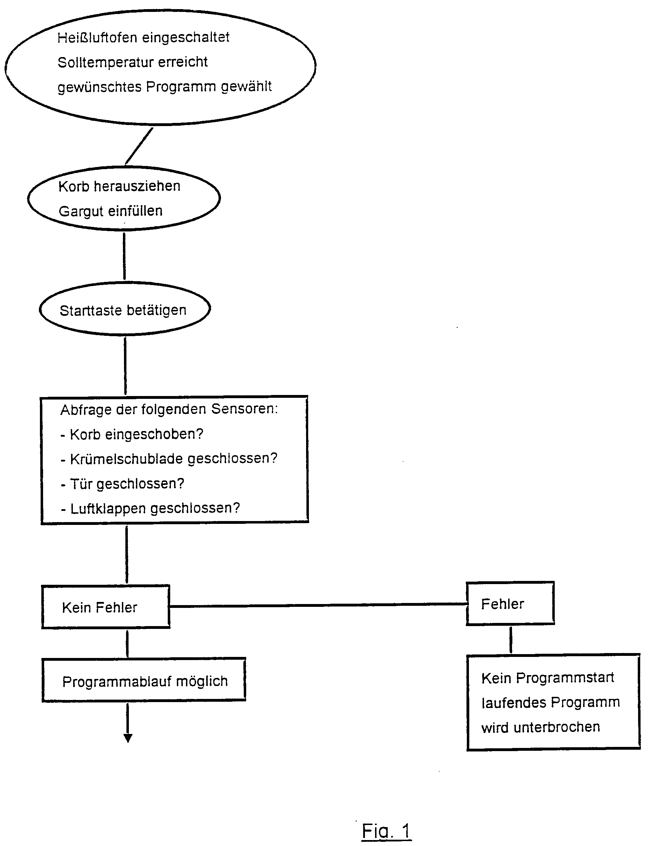

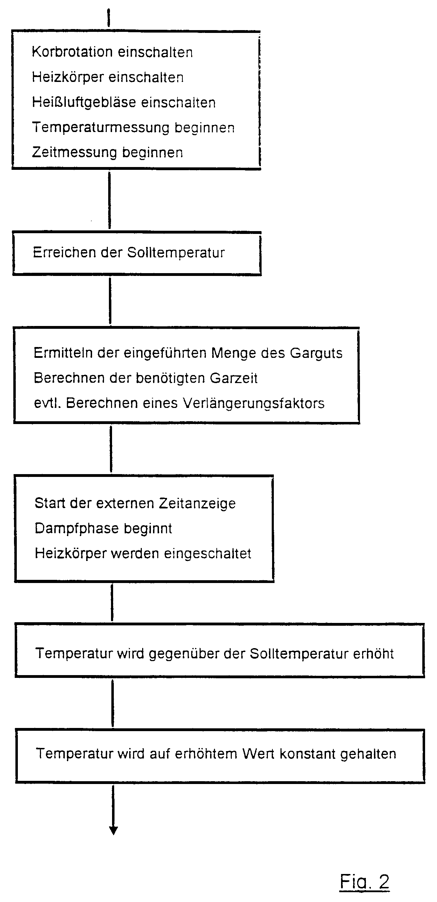

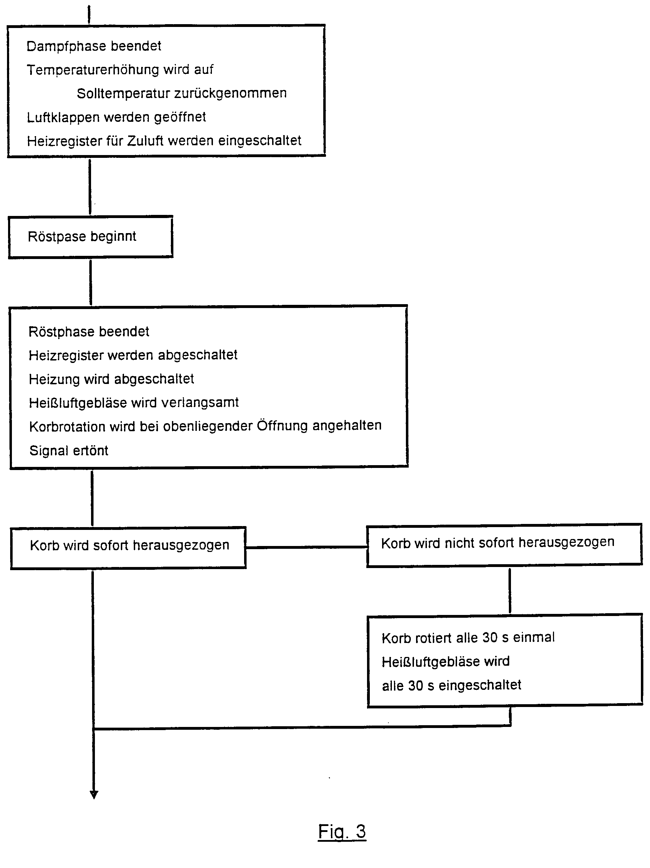

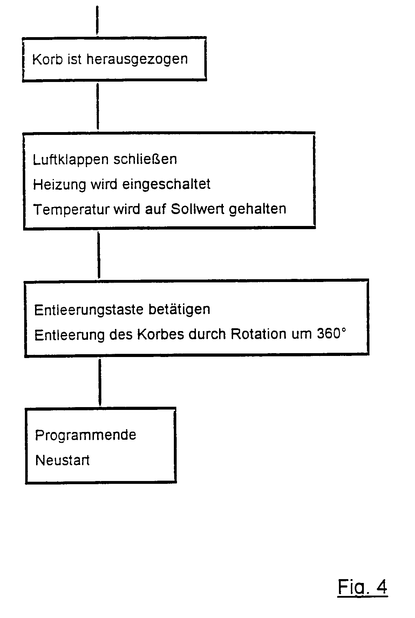

In den Figuren 1 bis 4 ist der gesamte Programmablauf vom Einschalten des Geräts bis zum Programmende nach der Zubereitung der eingeführten Lebensmittel in seinen wesentlichen Schritten dargestellt. Beim Beginn des erfindungsgemäßen Verfahrens in einer bevorzugten Ausführungsform wird zunächst der Heißluftofen eingeschaltet und auf die Solltemperatur aufgeheizt. Vom Bedienpersonal wird in Abhängigkeit von der Art der zuzubereitenden Lebensmittel aus einer zuvor gespeicherten Programmbibliothek das geeignete Programm gewählt.

Nach Erreichen der Solltemperatur wird der Korb für das Gargut aus dem Gerät herausgezogen und das Gargut in den Korb eingefüllt.

Mit Betätigen der Starttaste wird das Garprogramm gestartet, wobei zunächst eine Reihe von Sensoren abgefragt werden. Es wird festgestellt, ob der Korb für das Gargut vollständig in das Gerät eingeschoben ist; ob die unter dem Gerät befindliche Krümelschublade geschlossen ist; ob die für Wartungsarbeiten erforderliche Tür am Gerät geschlossen ist; und ob die zum Garraum des Gerätes führenden Luftklappen geschlossen sind.

Wenn die abgefragten Sensoren einen Fehler melden, wird kein Programmstart durchgeführt.

Wird kein Fehler gemeldet, so beginnt das gewünschte Programm.

Der Antrieb zur Rotation des Korbes wird eingeschaltet. Die für die Aufrechterhaltung der Temperatur im Garraum vorgesehenen Heizkörper werden eingeschaltet. Das Heißluftgebläse, das die Innenluft des Garraums über die Heizkörper befördert, wird eingeschaltet. Es beginnt eine Aufnahme der Temperaturkurve im Garraum, und die seit dem Programmstart verstrichene Zeit wird registriert.

Beim Einführen einer gewissen Menge kalter oder tiefgefrorener Lebensmittel ist es unvermeidlich, daß die Innentemperatur des Garraums unter die Solltemperatur sinkt. Aus dem zeitlichen Verlauf der Temperaturabsenkung, aus der Minimaltemperatur, die erreicht wird und aus der Zeitdauer bis zum erneuten Erreichen der Solltemperatur kann die Menge des eingeführten Gargutes bestimmt werden.

Beim Erreichen der vorgesehenen Solltemperatur beginnt die sogenannte Dampfphase. Es wird zunächst die für die eingeführte Menge des Gargutes erforderliche Garzeit berechnet, eventuell wird bei großen Mengen ein Verlängerungsfaktor vorgesehen, der sich daraus ergibt, daß die Zirkulation der Heißluft zwischen den einzelnen Teilen des Gargutes mit zunehmender Menge weniger effizient wird.

Eine externe, am Gerät angebrachte Zeitanzeige wird gestartet und zeigt zunächst die noch verbleibende gesamte Zubereitungszeit an. Der Garraum ist bei geschlossenen Zuluft- und und Abluftklappen zum Außenraum hin geschlossen, so daß die aus dem Gargut entweichende Feuchtigkeit die Luftfeuchtigkeit im Garraum beträchtlich erhöht. Das Gargut wird in heißem Dampf gegart. Beim Beginn der Dampfphase werden die Heizkörper im Garraum erneut eingeschaltet und die Temperatur wird gegenüber der vorgesehenen Solltemperatur, die während der Wartephasen des Heißluftofens und während der Röstphase eingehalten werden soll, um ca. 20° angehoben. Wegen der hohen Luftfeuchtigkeit während der Dampfphase ist diese Temperaturerhöhung für das zuzubereitende Lebensmittel unschädlich und verkürzt die Zeitdauer der Dampfphase erheblich. Die Temperaturregelung des Heißluftofens hält während der Dampfphase die Temperatur auf dem erhöhten Niveau.

Wenn die Dampfphase beendet ist, d. h., wenn das Lebensmittel bis in den Kern gegart ist, wird die Temperaturerhöhung auf die eingestellte Solltemperatur, die für die Röstphase vorgesehen ist, zurückgenommen. Die Luftklappen für einen in den Garraum führenden Zuluftkanal sowie für einen Abluftkanal werden geöffnet, und im Zuluftkanal werden Heizregister eingeschaltet, die die Zulufttemperatur bereits auf die Solltemperatur anheben. Die nun beginnende Röstphase wird für die vorberechnete Zeit ablaufen, wobei die Luft des Innenraums ständig durch vorgeheizte Zuluft ersetzt wird und die noch aus den Lebensmitteln austretende Feuchtigkeit durch die Abluft aus dem Garraum entfernt wird. Bei der sich nun einstellenden trockenen Atmosphäre wird das Lebensmittel gebräunt, so daß das optisch und sensorisch angestrebte Zubereitungsergebnis erreicht wird.

Nach Beendigung der Röstphase werden die Heizregister in den Zuluftkanälen sowie die Heizung im Garraum abgeschaltet. Das Heißluftgebläse wird auf eine langsame Drehzahl verlangsamt und die Rotation des Korbes wird in der Stellung angehalten, in der die offene Oberseite des Korbes nach oben weist. Ein Signal ertönt, um dem Bedienpersonal anzuzeigen, daß der Zubereitungsvorgang abgeschlossen ist und das Gargut entnommen werden kann. Wenn der Korb sofort aus dem Garraum herausgezogen wird, werden die Luftklappen geschlossen, die Heizung des Garraums wird wieder eingeschaltet, und die Temperatur des Garraums wird auf den eingestellten Sollwert gebracht und dort gehalten. Beim Betätigen einer Entleerungstaste durch das Bedienpersonal wird der Korb durch eine einmalige Rotation um 360° entleert, wobei das zubereitete Lebensmittel aus dem Korb herausfällt. Danach ist das Zubereitungsprogramm beendet und das Gerät ist für einen Neustart des Programms bereit. Wenn nach der Beendigung der Röstphase der Korb nicht unmittelbar aus dem Garraum herausgezogen wird, wird in regelmäßigen Abständen, etwa alle 30 Sekunden, der Korb einmal rotiert, so daß die Teile des zubereiteten Lebensmittels nicht miteinander verbacken. Zudem wird in regelmäßigen Abständen das Heißluftgebläse eingeschaltet. Wenn der Korb dann schließlich aus dem Gerät herausgezogen wird, sind die abschließenden Verfahrensschritte zum Entleeren und Bereithalten des Geräts wie bereits beschrieben.

Das insoweit beschriebene Verfahren zum Zubereiten von Lebensmitteln in einem Heißluftofen spart im wesentlichen an Zubereitungszeit, weil in der Dampfphase die Temperatur gegenüber der Solltemperatur in der Röstphase um ca. 20° angehoben wird. Die Temperatur in der Dampfphase beträgt dann etwa 250° Celsius, während in der Röstphase die Temperatur bei ca. 230° Celsius gehalten wird. So verläuft der Garvorgang in der Dampfphase schneller, ohne daß die Qualität des Endprodukts beeinträchtigt würde. Eine so hohe Temperatur in der Röstphase würde dagegen den Geschmack und die Konsistenz des Produkts erheblich verschlechtern.

Bei dem bevorzugten Ausführungsbeispiel des erfindungsgemäßen Verfahrens wird außerdem dadurch Zubereitungszeit eingespart, daß die Zuluft beim Beginn der Röstphase bereits auf die Solltemperatur vorgeheizt wird, so daß mit Eintritt in die Röstphase kein durch die zugeführte Frischluft verursachter Temperaturabfall eintritt.

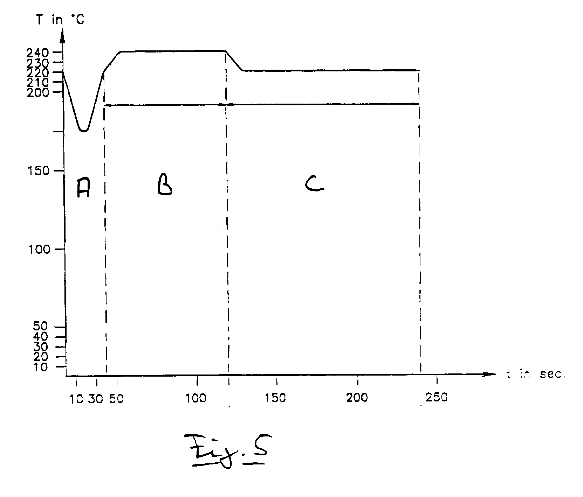

In Figur 5 ist der Temperaturverlauf während eines Zubereitungsvorgangs dargestellt. In der Phase A fällt die Temperatur aufgrund des eingebrachten, kalten Lebensmittels, steigt dann an und erreicht schließlich die Solltemperatur. Die Länge der Phase A ist für die Menge des eingefüllten Lebensmittels Kennzeichnend.

Phase B und Phase C kennzeichnen die Dampf- bzw. die Röstphase, wie im vorhergehenden Text beschrieben.

## Patentansprüche

1. Verfahren für die Zubereitung von Lebensmitteln wie z.B. Pommes Frites in einem Heißluftofen mit einer Dampfphase und einer Röstphase, mit folgenden Schritten:
Aufheizen eines Garraums auf eine Solltemperatur,
Einfüllen des Garguts in einen in dem Garraum drehbaren Korb,
Einschalten eines Korbrotationsantriebs,
Einschalten eines Heißluftgebläses,
Erneutes Aufheizen des Garraums,
Garen des Garguts in dem Garraum, wobei der in dem Gargut enthaltene Wasseranteil zum Teil in den Garraum gelangt und eine Atmosphäre mit erhöhter Feuchte entsteht (Dampfphase),
Austauschen der Atmosphäre gegen relativ trockenere Luft (Röstphase),
Abschalten von Heizung und Korbrotationsantrieb,
**dadurch gekennzeichnet**, **daß** zusätzlich folgender Schritt vorgesehen ist:
Aufheizen des Garraums während der Dampfphase auf eine höhere Temperatur als die Solltemperatur.

2. Verfahren nach Anspruch 1, **dadurch**, **gekennzeichnet**, **daß** zusätzlich folgender Schritt vorgesehen ist: Aufheizen der Zuluft für den Austausch der Atmosphäre auf die Solltemperatur.

3. Verfahren nach Anspruch 1, **dadurch**, **gekennzeichnet**, **daß** zusätzlich folgender Schritt vorgesehen ist: Erfassung des Zeitraums, der zum Wiedererreichen der Solltemperatur erforderlich ist, nachdem das Gargut in den Garraum eingeführt wurde.

4. Verfahren nach Anspruch 3, **dadurch**, **gekennzeichnet**, **daß** zusätzlich folgender Schritt vorgesehen ist: Steuerung der Länge der Dampfphase und/oder der Röstphase in Abhängigkeit von dem ermittelten Zeitraum.

5. Verfahren nach Anspruch 1, **dadurch**, **gekennzeichnet**, **daß** zusätzlich folgender Schritt vorgesehen ist: Ausgabe des zubereiteten Garguts durch manuelles Herausziehen des Korbs und nachfolgende automatische Drehung des Korbs um 360°.

6. Verfahren nach Anspruch 1, **dadurch**, **gekennzeichnet**, **daß** die Temperatur während der Dampfphase zwischen 200°C und 270°C beträgt.

7. Verfahren nach Anspruch 1, **dadurch**, **gekennzeichnet**, **daß** die Temperatur während der Dampfphase zwischen 240°C und 255°C beträgt.

8. Verfahren nach Anspruch 1, **dadurch**, **gekennzeichnet**, **daß** die Temperatur während des größten Teils der Dampfphase 250°C beträgt.

9. Verfahren nach Anspruch 1, **dadurch**, **gekennzeichnet**, **daß** die Temperatur während der Röstphase zwischen 190°C und 240°C beträgt.

10. Verfahren nach Anspruch 1, **dadurch, gekennzeichnet**, **daß** die Temperatur während der Röstphase zwischen 220°C und 235°C beträgt.

11. Verfahren nach Anspruch 1**, dadurch**, **gekennzeichnet**, **daß** die Temperatur während des größten Teils der Röstphase 230°C beträgt.

12. Verfahren nach Anspruch 1, **dadurch**, **gekennzeichnet**, **daß** zusätzlich folgender Schritt vorgesehen ist: Rotation des Korbs mit dem zubereiteten Gargut in regelmäßigen Intervallen, sofern das Garguts nicht unmittelbar entnommen wurde.

13. Verfahren nach einem der vorherigen Ansprüche, **dadurch gekennzeichnet**, daß zusätzlich folgender Schritt vorgesehen ist: Abfragen einer Eingabevorrichtung für eine Veränderung der Prozeßparameter und Veränderung bestimmter Parameter in Abhängigkeit von dem Abfrageereignis.

## Claims

1. Method of preparing food such as French fries, for example, in a hot-air oven with a steaming phase and a roasting phase, comprising the following steps:
heating of a cooking compartment up to a setpoint temperature,
introduction of the food to be cooked into a basket rotatable in the cooking compartment,
switching-on of a basket rotary drive,
switching-on of a hot-air fan,
renewed heating-up of the cooking compartment,
cooking of the food to be cooked in the cooking compartment, wherein the water content of the food to be cooked is partially released into the cooking compartment and an atmosphere of increased humidity arises (steaming phase),
exchange of the atmosphere for relatively drier air (roasting phase),
switching-off of the heating and basket rotary drive,
**characterized in that** in addition the following step is provided:
heating of the cooking compartment during the steaming phase up to a higher temperature than the setpoint temperature.

2. Method according to claim 1, **characterized in that** in addition the following step is provided: heating of the additional air for exchange of the atmosphere up to the setpoint temperature.

3. Method according to claim 1, **characterized in that** in addition the following step is provided: acquisition of the time taken to regain the setpoint temperature after the food to be cooked has been introduced into the cooking compartment.

4. Method according to claim 3, **characterized in that** in addition the following step is provided: control of the length of the steaming phase and/or of the roasting phase in dependence upon the acquired time.

5. Method according to claim 1, **characterized in that** in addition the following step is provided: removal of the prepared food by manual withdrawal of the basket and subsequent automatic rotation of the basket through 360°.

6. Method according to claim 1, **characterized in that** the temperature during the steaming phase is between 200°C and 270°C.

7. Method according to claim 1, **characterized in that** the temperature during the steaming phase is between 240°C and 255°C.

8. Method according to claim 1, **characterized in that** the temperature during most of the steaming phase is 250°C.

9. Method according to claim 1, **characterized in that** the temperature during the roasting phase is between 190°C and 240°C.

10. Method according to claim 1, **characterized in that** the temperature during the roasting phase is between 220°C and 235°C.

11. Method according to claim 1, **characterized in that** the temperature during most of the roasting phase is 230°C.

12. Method according to claim 1, **characterized in that** in addition the following step is provided: rotation of the basket with the prepared food at regular intervals provided that the food has not been immediately removed.

13. Method according to one of the previous claims, **characterized in that** in addition the following step is provided: interrogation of an input device for a variation of the process parameters and variation of specific parameters in dependence upon the interrogation event.

## Revendications

1. Procédé de préparation d'aliments comme par exemple des frites dans un four à air chaud avec une phase de vapeur et une phase de grillage, avec les étapes suivantes :
chauffage d'une enceinte de cuisson à une température de consigne,
introduction du produit à cuire dans un panier pouvant tourner dans l'enceinte de cuisson,
mise en marche d'un dispositif d'entraînement du panier en rotation,
mise en marche d'un ventilateur à air chaud,
nouveau chauffage de l'enceinte de cuisson,
cuisson du produit à cuire dans l'enceinte de cuisson, de sorte que la fraction d'eau contenue dans le produit à cuire parvient en partie dans l'enceinte de cuisson et qu'il se forme une atmosphère à humidité augmentée (phase de vapeur),
remplacement de l'atmosphère par de l'air relativement plus sec (phase de grillage),
arrêt du chauffage et du dispositif d'entraînement du panier en rotation,
caractérisé en ce qu'il est prévu en outre l'étape suivante :
chauffage de l'enceinte de cuisson pendant la phase de vapeur à une température supérieure à la température de consigne.

2. Procédé selon la revendication 1, caractérisé en ce qu'il est prévu en outre l'étape suivante : chauffage à la température de consigne de l'air introduit pour le remplacement de l'atmosphère.

3. Procédé selon la revendication 1, caractérisé en ce qu'il est prévu en outre l'étape suivante : détermination de la durée qui est nécessaire pour atteindre de nouveau la température de consigne après que le produit à cuire a été introduit dans l'enceinte de cuisson.

4. Procédé selon la revendication 3, caractérisé en ce qu'il est prévu en outre l'étape suivante : commande de la longueur de la phase de vapeur et/ou de la phase de cuisson en fonction de la durée déterminée

5. Procédé selon la revendication 1, caractérisé en ce qu'il est prévu en outre l'étape suivante : retrait du produit à cuire préparé par extraction manuelle du panier et rotation automatique subséquente du panier de 360°.

6. Procédé selon la revendication 1, caractérisé en ce que la température est située entre 200°C et 270°C pendant la phase de vapeur.

7. Procédé selon la revendication 1, caractérisé en ce que la température est située entre 240°C et 255°C pendant la phase de vapeur.

8. Procédé selon la revendication 1, caractérisé en ce que la température est de 250°C pendant la plus grande partie de la phase de vapeur.

9. Procédé selon la revendication 1, caractérisé en ce que la température est située entre 190°C et 240°C pendant la phase de grillage.

10. Procédé selon la revendication 1, caractérisé en ce que la température est située entre 220°C et 235°C pendant la phase de grillage.

11. Procédé selon la revendication 1, caractérisé en ce que la température est de 230°C pendant la plus grande partie de la phase de grillage.

12. Procédé selon la revendication 1, caractérisé en ce qu'il est prévu en outre l'étape suivante : rotation à intervalles réguliers du panier avec le produit à cuire préparé dans la mesure où le produit à cuire n'a pas été retiré immédiatement.

13. Procédé selon l'une des revendications précédentes, caractérisé en ce qu'il est prévu en outre l'étape suivante : interrogation d'un dispositif d'entrée concernant une modification des paramètres du procédé et modification de paramètres déterminés en fonction de l'événement d'interrogation.
